# EUROPEAN PATENT APPLICATION

(11) **EP 4 737 689 A1**
(43) Date of publication of application: **06.05.2026**
(21) Application number: 25212590.1
(22) Date of filing: 31.10.2025
(51) Int. Cl.: F01D 5/28, F01D 9/04, F01D 17/16, F01D 25/24, B22F 5/00, B22F 5/04, B29C 70/24, C04B 35/80, D03D 25/00, F01D 25/28

(54) **TURBINE ENGINE FRAME ASSEMBLY HAVING A MOUNTING BRACKET ASSEMBLY**

(30) Priority: 01.11.2024 US 202463715155 P
(71) Applicant: General Electric Company, Cincinnati, Ohio 45215 (US)
(72) Inventor: WU, Wei, Evendale, 45241 (US); KRAY, Nicholas, West Chester, 45069 (US); GILBERT, Aaron, Lynn, 01910 (US); XIE, Ming, Evendale, 45215 (US)
(74) Representative: Openshaw & Co.

(57) **Abstract**

A frame assembly includes a frame (170) and a mounting bracket assembly (300, 302, 304, 306, 500, 502). The frame (170) includes an inner hub (174), an outer shell (172, 470) located opposite the inner hub (174), and a plurality of struts (158) connecting the inner hub (174) with the outer shell (172, 470). At least one strut of the plurality of struts (158) is a hollow strut (400) with a radial passage (440) extending therethrough. The mounting bracket assembly (300, 302, 304, 306, 500, 502) includes an inner flange (330) located on an inner surface (178) of the inner hub (174), an outer flange (320) located on an outer surface (176) of the outer shell (172, 470), and a radial linkage (340) connecting the inner flange (330) with the outer flange (320). The radial linkage (340) extends through the radial passage (440) of the hollow strut (400).

## Description

### CROSS REFERENCE TO RELATED APPLICATIONS

The present application claims the benefit of U.S. Provisional Patent Application No. 63/715,155, filed on November 1, 2024, which is hereby incorporated by reference herein in its entirety.

### TECHNICAL FIELD

The present disclosure relates to frame assemblies, particularly, frame assemblies for aircraft engines.

### BACKGROUND

Turbine engines used in aircraft generally include a fan, a compressor section, a combustion section, and a turbine section. A combustor of the combustion section generates combustion gases for driving one or more turbines of the turbine section, and the turbine can be used to drive the fan. A portion of air flowing into the fan flows through the compressor section, a combustion section, and a turbine section as core air, and another portion of the air flowing into the fan bypasses these sections and flows through the turbine engine as bypass air. The compressor section can include one or more compressors, also be driven by the turbine, to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional view of a turbine engine for an aircraft.
FIGS. 2A is a schematic view of a three-dimensional fiber weave pattern.
FIG. 2B is a schematic, cross-sectional view of the fiber weave pattern shown in FIG. 2A taken along line 2B-2B in FIG. 2A.
FIG. 2C is a schematic, cross-sectional view of a fiber weave pattern shown similar to the fiber weave pattern shown in FIG. 2A, but with a different interlocking fiber pattern.
FIG. 2D is a schematic, cross-sectional view of a fiber weave pattern similar to the fiber weave pattern shown in FIG. 2A, but with another interlocking fiber pattern.
FIG. 3 is a flow chart of a general process of manufacturing a composite component that may be used in the turbine engine of FIG. 1.
FIG. 4 is a schematic aft-looking view of a guide vane structure that may be used in the turbine engine of FIG. 1.
FIG. 5 is a schematic view of the guide vane structure in FIG. 4 with a mounting bracket assembly omitted for clarity.
FIG. 6 is a schematic, cross-sectional view of a portion of the guide vane structure shown in FIG. 4 taken along line 6-6 in FIG. 4.
FIG. 7 is a schematic, cross-sectional view, taken from a perspective similar to that of FIG. 6, of a portion of the guide vane structure having a mounting bracket assembly.
FIG. 8 is a schematic, cross-sectional view of an inner portion of the guide vane structure and an inner portion of a mounting bracket assembly.
FIG. 9A is a schematic, cross-sectional view of an inner portion of the guide vane structure and an inner portion of a mounting bracket assembly.
FIG. 9B is a schematic, cross-sectional view of a portion of the inner portion of the guide vane structure and the inner portion of the mounting bracket assembly shown in FIG. 9A taken along line 9B-9B in FIG. 9A.
FIG. 10A is a schematic, cross-sectional view of an outer portion of the guide vane structure and an outer portion of a mounting bracket assembly.
FIG. 10B is a schematic, cross-sectional view of a portion of the upper portion of the guide vane structure and the upper portion of the mounting bracket assembly shown in FIG. 10A taken along line 10B-10B in FIG. 10A.
FIG. 11 is a schematic, cross-sectional view, taken from a perspective similar to that of FIG. 6, of a portion of the guide vane structure having an alternative mounting bracket assembly.
FIG. 12 is a schematic, cross-sectional view, taken from a perspective similar to that of FIG. 6, of a portion of the guide vane structure having an alternative mounting bracket assembly.
FIG. 13 is a flow chart of a method of forming a frame assembly.
FIG. 14 is a flow chart of another method of forming a frame assembly.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or vehicle, and refer to the normal operational attitude of the turbine engine or vehicle. More particularly, forward and aft are used herein with reference to a direction of travel of the vehicle and a direction of propulsive thrust of the gas turbine engine.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

Here and throughout the specification and claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

The term "fastened" as used herein, refers to securely attaching or joining two or more components together using mechanical means, such as screws, bolts, adhesives, brazing, soldering, or other methods, to ensure stability and integrity in their assembled state.

The term "monolithic" as used herein, in connection with a component or a structure, refers to a component or a structure that is formed from a single piece of material, such as a metal sheet, without joints or seams.

The term "integral" as used herein, in connection with a component or a structure, refers to a component or a structure that is formed as a single, unified component or structure. Other components may be fastened to the integral structure or the component, but the integral component or the structure itself does not include fastened components or structures. A monolithic component or structure is an integral component or structure.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), and a metal matrix composite (MMC). The composite may be formed of a matrix material and a reinforcing element or reinforcing material, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that is formed into a bundle.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength. One or more layers of adhesive can be used in forming or coupling composite components. The adhesive can require curing at elevated temperatures or other hardening techniques.

As used herein, a "preform" refers to a shaped or shapeable arrangement of reinforcing fibers configured to define at least a portion of the composite component prior to resin infiltration, curing, or consolidation. The reinforcing fibers can be provided in different forms, including, but not limited to, two-dimensional woven fabrics, three-dimensional woven fabrics, braided fabrics, stitched fabrics, knitted fabrics, non-woven mats, unidirectional tapes, or combinations thereof. A preform can include multiple layers or plies, may incorporate stitching, binder materials, or tackifiers to maintain a desired geometry, and may be near-net shaped or provided as a portion of an assembly or a subassembly for subsequent processing.

As used herein, PMC refers to a class of materials and, more specifically, a class of composite materials using a polymer matrix material. Resins can be used as matrix materials for PMCs and can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

The PMC material may be a prepreg. A prepreg is a reinforcing material (e.g., a reinforcing fiber) pre-impregnated with the polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers.

Instead of using a prepreg with thermoplastic polymers, another non-limiting example utilizes dry reinforcing fibers. The dry reinforcing fibers can be positioned to form a preform. For example, the reinforcing fibers and, more specifically, reinforcing fiber tows may be woven together as a woven fabric. Woven fabrics can include, but are not limited to, dry carbon fibers woven together exclusively or woven together with polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include braided material, woven material, or any combination thereof. Resin can be pumped into or otherwise provided to the mold or the cavity to impregnate the dry fibers. The combination of the impregnated fibers and the resin is then cured and removed from the mold. As noted above, the matrix material can include thermoplastic and thermoset resins. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide, SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods, including, but not limited to, melt infiltration, chemical vapor infiltration, polymer impregnation pyrolysis (PIP), or any combination thereof.

The term "metallic" as used herein is indicative of a material that is metal-based including metals, such as, but not limited to, titanium, iron, aluminum, stainless steel, and nickel alloys. A metallic material or a metal alloy can be a combination of at least two or more elements or materials, where at least one is a metal.

As used herein, an alloy is "based" on a particular element when that element is present in the alloy at the greatest weight percent, by total weight of the alloy, of all elements contained in the alloy. For example, an iron-based alloy has a higher weight percentage of iron than any other single element present in the alloy.

A turbine engine can include a frame that supports various components of the turbine engine. The frame can include, for example, an outer shell, an inner hub, and a plurality of radial struts connecting the outer shell with the inner hub. The outer shell and the inner hub can define a flow path therebetween for air flowing through the turbine engine. Forming the frame as an integral frame, such as forming the outer shell, the inner hub, and the plurality of radial struts as an integral assembly, can reduce part count and minimize weight. Such an integral frame can be free from attachment structures that would otherwise connect the struts to the outer shell and the inner hub. The frame can be manufactured from composite materials to further reduce weight.

Although minimizing attachment features in the frame is advantageous for weight and manufacturing efficiency, it can be necessary to provide attachment or mounting structures for certain engine connections. For example, the frame may include an engine mount used to connect the engine to an aircraft structure, such as a wing or pylon. Integrating such attachments into a composite frame presents challenges, including the need to accommodate multiple material systems and to ensure reliable load transfer through structural interfaces.

Disclosed herein are mounting bracket assemblies configured for use with a turbine engine frame, particularly an integral composite frame. The disclosed assemblies provide engineered attachment solutions that enable secure integration of engine mounts and other hardware while maintaining the benefits of an integral frame. In some embodiments, detachable mechanical features are employed to connect mounting brackets to the composite frame. In other embodiments, co-molded mechanical features are integrated with the frame during manufacture. Both approaches provide attachment structures that align with and support key engine load paths, enabling robust transfer of loads from the engine to the aircraft structure without undermining the structural efficiency of the integral composite frame.

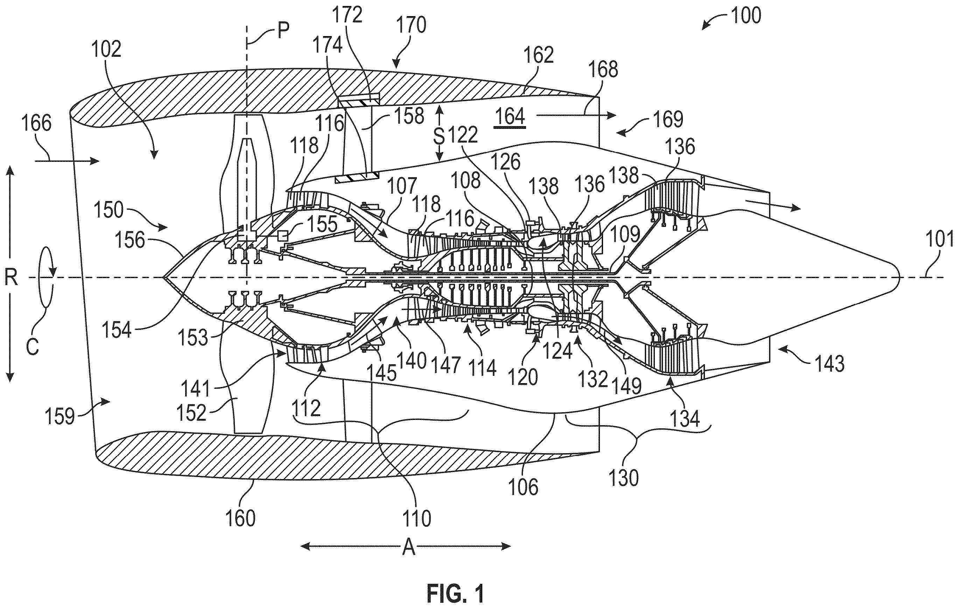

FIG. 1 is a schematic, cross-sectional diagram of a turbine engine 100 that may be used on an aircraft. The turbine engine 100 has an axial direction A (extending parallel to a longitudinal centerline axis 101, shown for reference in FIG. 1), a radial direction R, and a circumferential direction C. The circumferential direction C extends in a direction rotating about the longitudinal centerline axis 101 (the axial direction A).

The turbine engine 100 depicted in FIG. 1 includes, in serial flow relationship, a compressor section 110, a combustion section 120, and a turbine section 130. The turbine engine 100 depicted in FIG. 1 is a turbofan engine that includes a fan section 102. The compressor section 110, the combustion section 120, and the turbine section 130 are disposed downstream from the fan section 102. The compressor section 110, the combustion section 120, and the turbine section 130 are substantially enclosed within an outer casing 106 that is substantially tubular and defines a core inlet 141. In this embodiment, the core inlet 141 is annular about the longitudinal centerline axis 101. As schematically shown in FIG. 1, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbine engine 100 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbine engine 100 includes a high-pressure (HP) shaft 108 and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 may include a plurality of compressor stages. In each stage, a plurality of compressor blades 116 rotates relative to a corresponding plurality of static compressor vanes 118 (also called nozzles) to compress or to pressurize the core air 145 passing through the stage. In a single compressor stage, the plurality of compressor blades 116 can be provided in a ring, extending radially outwardly relative to the longitudinal centerline axis 101 from a blade platform to a blade tip (e.g., extend in the radial direction R). The compressor blades 116 may be a part of a compressor rotor that includes a disk and each compressor blade 116 of the plurality of compressor blades 116 extends radially from the disk. Other configurations of the compressor rotor may be used, including, for example, blisks where the disk and the compressor blades 116 are integrally formed with each other to be a single piece. The corresponding static compressor vanes 118 are positioned upstream of and adjacent to the rotating compressor blades 116. The compressor vanes 118 for a stage of the compressor can be mounted to a core casing 107 in a circumferential arrangement. The core casing 107 may define, at least in part, the core air flow path 140. Each compressor stage may be used to sequentially compress the core air 145 flowing through the core air flow path 140, generating compressed air 147. Any suitable number of compressor blades 116, compressor vanes 118, and compressor stages may be used.

Each of the HP turbine 132 and the LP turbine 134 also may include a plurality of turbine stages. In each stage, a plurality of turbine blades 136 rotates relative to a corresponding plurality of static turbine vanes 138 (also called a nozzle) to extract energy from combustion gases 149 passing through the stage. The turbine blades 136 may be a part of a turbine rotor. Any suitable configuration for a turbine rotor may be used, including, for example, a disk with the plurality of turbine blades 136 extending from the disk. The corresponding static turbine vanes 138 are positioned upstream of and adjacent to the rotating turbine blades 136. The turbine vanes 138 for a stage of the turbine can be mounted to the core casing 107 in a circumferential arrangement.

In the combustion section 120, fuel, received from a fuel system (not shown), is injected into a combustion chamber 124 of a combustor 122 by fuel nozzles 126. The fuel is mixed with the compressed air 147 from the compressor section 110 to form a fuel and air mixture, and combusted, generating combustion products (i.e., combustion gases 149). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft. The combustion gases 149 are discharged from the combustion chamber 124. These combustion gases may be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The turbine engine 100 further includes one or more drive shafts. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of the kinetic energy from the combustion gases 149 is extracted via the one or more stages of the turbine blades 136 and turbine vanes 138 of the HP turbine 132. This causes the HP shaft 108 to rotate, supporting operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the kinetic energy is extracted from the combustion gases 149 via one or more stages of the turbine blades 136 and the turbine vanes 138 of the LP turbine 134. This causes the LP shaft 109 to rotate, which supports operation of the LP compressor 112 (self-sustaining cycle), and rotation of the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the compressor rotors and the turbine rotors.

The fan section 102 shown in FIG. 1 includes a fan 150 having a plurality of fan blades 152 coupled to a disk 153. As depicted in FIG. 1, the fan blades 152 extend outwardly from the disk 153 generally along the radial direction R. In the case of a variable pitch fan, as depicted in FIG. 1, for example, the plurality of fan blades 152 is rotatable relative to the disk 153 about a pitch axis P. Each of the fan blades 152 can be connected to the disk 153 by a pitch bearing 154 that allows for rotation of the fan blades 152 about the pitch axis P. The fan blades 152 are rotatable within the pitch bearing 154 by an actuator 155 operatively coupled to the fan blades 152 to collectively vary the pitch of the fan blades 152 in unison. The fan blades 152 and the disk 153 are rotatable, together, about the longitudinal centerline axis 101 by the LP shaft 109. The LP compressor 112 may also be directly driven by the LP shaft 109, as depicted in FIG. 1. The disk 153 is covered by a fan hub 156 aerodynamically contoured to promote an airflow through the plurality of fan blades 152. Further, a nacelle 160 circumferentially surrounds the fan 150, and, in the depicted embodiment, at least a portion of the outer casing 106. The nacelle 160 may also be referred to as an annular fan casing or an outer nacelle. The nacelle 160 is supported relative to the outer casing 106 by a plurality of outlet guide vanes 158 that is circumferentially spaced about the nacelle 160 and the outer casing 106. A downstream section 162 of the nacelle 160 extends over an outer portion of the outer casing 106 so as to define a bypass airflow passage 164 therebetween.

During operation of the turbine engine 100, a volume of air 166 enters the turbine engine 100 through an inlet of the nacelle 160 and/or the fan section 102 (referred to herein as an engine inlet 159). As the volume of air 166 passes across the fan blades 152, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

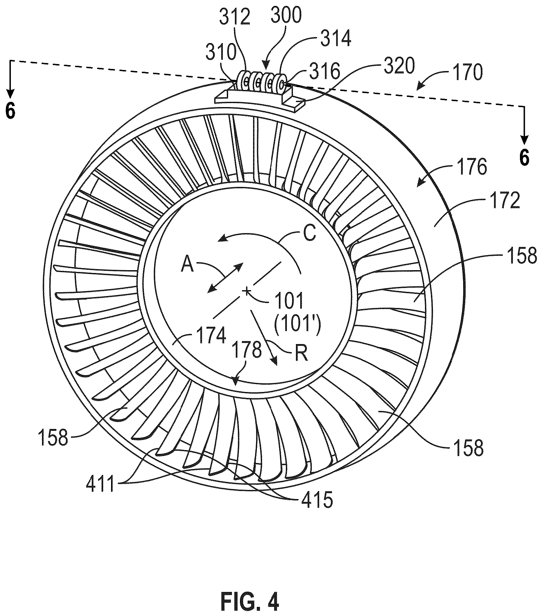

These outlet guide vanes 158 can be part of a guide vane structure 170. The guide vane structure 170 will be described in more detail below, and the outlet guide vanes 158 are an example of a composite airfoil discussed herein that may be implemented in the turbine engine 100. The guide vane structure 170 includes an outer shell 172 that extends circumferentially about a guide vane structure centerline axis 101' (FIG. 4), which can be congruent to the longitudinal centerline axis 101 of the turbine engine 100, and also extends in the axial direction A (FIG. 1). The guide vane structure 170 also includes an inner hub 174 that extends circumferentially about the guide vane structure centerline axis 101'. Each outlet guide vane 158 extends between the outer shell 172 and the inner hub 174, and the outlet guide vanes 158 are circumferentially spaced apart from one another about the guide vane structure centerline axis 101'. The outlet guide vanes 158 can be hollow, and one or more of the outlet guide vanes 158 can have a passage for service lines, such as wiring harnesses and fluid pipes, to pass from the nacelle 160, though the outlet guide vane 158, and into the outer casing 106.

The turbine engine 100 shown in FIG. 1 and discussed herein (i.e., a turbofan engine) is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as other suitable numbers or arrangements of shafts, compressors, turbines, fans, etc. Further, although the turbine engine 100 is shown as a direct drive, fixed-pitch turbofan engine, in other embodiments, the turbine engine 100 may be a geared turbine engine (e.g., including a gearbox between the fan 150 and a shaft driving the fan, such as the LP shaft 109), may be a variable pitch turbine engine (i.e., including a fan 150 having a plurality of fan blades 152 rotatable about their respective pitch axes), etc.

The turbine engine 100 discussed herein is suitable for use on aircraft. Suitable aircraft include, for example, airplanes, helicopters, and unmanned aerial vehicles (UAV). In other embodiments, the turbine engine may be any other turbine engine, such as an industrial turbine engine incorporated into a power generation system, or a nautical turbine engine on a ship or other vessel.

Various components of the turbine engine 100 may be formed from composite materials. These components are referred to herein as composite components. The fan blades 152, the outlet guide vanes 158, the compressor blades 116, and the compressor vanes 118 may be made from PMC materials, for example. Other composites, such as CMC materials, may be used for other components, including, for example, turbine blades 136, turbine vanes 138, and components of the combustion section 120 such as combustor liners used to form the combustion chamber 124. Moreover, although the embodiments are described relative to a turbine engine 100, the composite component and methods of manufacturing may be used to form composite components used in applications beyond turbine engines.

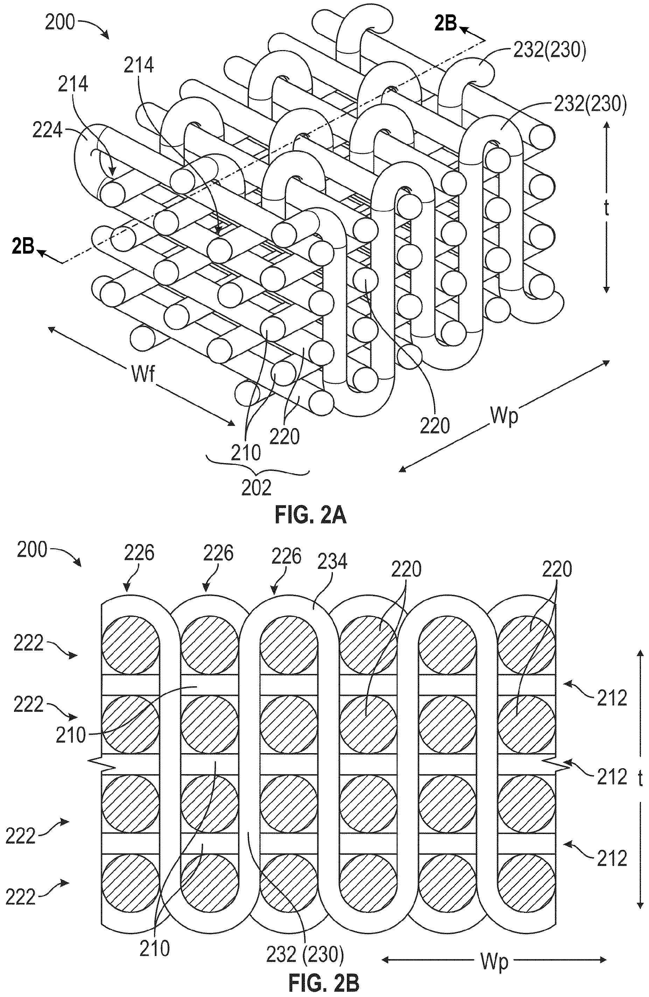

FIGS. 2A and 2B are schematics showing a three-dimensional fiber weave pattern that may be used to form a woven fabric 200. FIG. 2B is a cross-sectional view taken along line 2B-2B in FIG. 2A. In embodiments discussed herein, the composite components may be formed from a plurality of reinforcing fibers and, more specifically, a plurality of reinforcing fiber tows 202. The plurality of reinforcing fiber tows 202 is woven together to form the woven fabric 200. The plurality of reinforcing fiber tows 202 includes a plurality of first fiber tows, which, in this embodiment, is a plurality of warp fiber tows 210. The plurality of reinforcing fiber tows 202 also includes a plurality of second fiber tows, which, in this embodiment, is a plurality of weft fiber tows 220. The weft fiber tows 220 are oriented transversely to the warp fiber tows 210, and, in the depicted embodiment, the warp fiber tows 210 and the weft fiber tows 220 are oriented generally orthogonally to each other. The woven fabric 200 thus includes a warp direction Wp (also referred to as a first direction) and a weft direction Wf (also referred to as a second direction). The warp fiber tows 210 extend in the warp direction Wp and the weft fiber tows 220 extend in the weft direction Wf.

In the depicted embodiment, the woven fabric 200 is a three-dimensional woven fabric and the woven fabric 200 also includes a thickness direction t. The thickness direction may also be referred to as a z direction. The warp fiber tows 210 may be arranged relative to each other to form a plurality of warp fiber layers 212 in the thickness direction t and to form a plurality of warp fiber columns 214 in the weft direction Wf. Three warp fiber layers 212 are depicted in FIGS. 2A and 2B, but the woven fabric 200 may include any other numbers of warp fiber layers 212, including more than three warp fiber layers 212.

During a weaving process, the warp fiber tows 210 may be held in tension in the warp direction Wp, and one of the weft fiber tows 220 is passed or drawn therethrough. A shuttle (not shown) may be used to draw the one of the weft fiber tows 220 through the warp fiber tows 210. The shuttle may be passed through the warp fiber tows 210 in a first direction and then reversed to pass through the warp fiber tows 210 at a different height in the thickness direction, forming a plurality of weft fiber layers 222 in the thickness direction t. One of the weft fiber tows 220 may be continuous through at least a portion of the thickness of the woven fabric 200, and the one of the weft fiber tows 220 may include a portion extending in the thickness direction t, which may be referred to in some embodiments as a turnaround. This portion of the weft fiber tow thus may be referred to herein as a turnaround portion 224. The warp fiber tows 210 may be moved relative to each other to allow a space for the one of the weft fiber tows 220 to pass through the space. The warp fiber tows 210 may be moved relative to each other in different ways to create different patterns. In this way, weaving the woven fabric 200 includes positioning the warp fiber tows 210 (e.g., such that the warp fiber tows 210 are held stationary in tension), then laying the weft fiber tows 220 (e.g., such that the weft fiber tows 220 are drawn through and inserted over and under the corresponding warp fiber tows 210), and repeating this process until the woven fabric 200 is formed. The weft fiber tows 220 may be arranged relative to each other to form the plurality of weft fiber layers 222 in the thickness direction t and to form a plurality of weft fiber columns 226 in the warp direction Wp.

The woven fabric 200 also includes a plurality of interlocking fiber tows 230 (also referred to as Z-weaver fiber tows). The interlocking fiber tows 230 are additional warp fiber tows that are directed through the thickness of the woven fabric 200 during weaving to stitch the reinforcing fiber tows 202 together. The interlocking fiber tows 230 are woven to extend between two or more of the weft fiber layers 222. Different fiber patterns may be used for the interlocking fiber tows 230. A first interlocking fiber pattern, shown in FIGS. 2A and 2B, is an orthogonal interlocking pattern and the interlocking fiber tows 230 are referred to herein as orthogonal interlocking fiber tows 232. In this pattern, the orthogonal interlocking fiber tows 232 extend substantially in a direction that is orthogonal to the warp direction Wp, which is the thickness direction t in the depicted embodiment. As with the weft fiber tows 220, the interlocking fiber tows 230 (e.g., the orthogonal interlocking fiber tows 232) may include a turnaround portion 234. In the depicted embodiment, the turnaround portion 234 of the orthogonal interlocking fiber tows 232 is positioned to form an alternating pattern between each warp fiber columns 214. In the depicted embodiment, the orthogonal interlocking fiber tows 232 extend through the thickness of the woven fabric 200 and may be referred to as through-thickness interlocking fiber tows, but other thicknesses may be used.

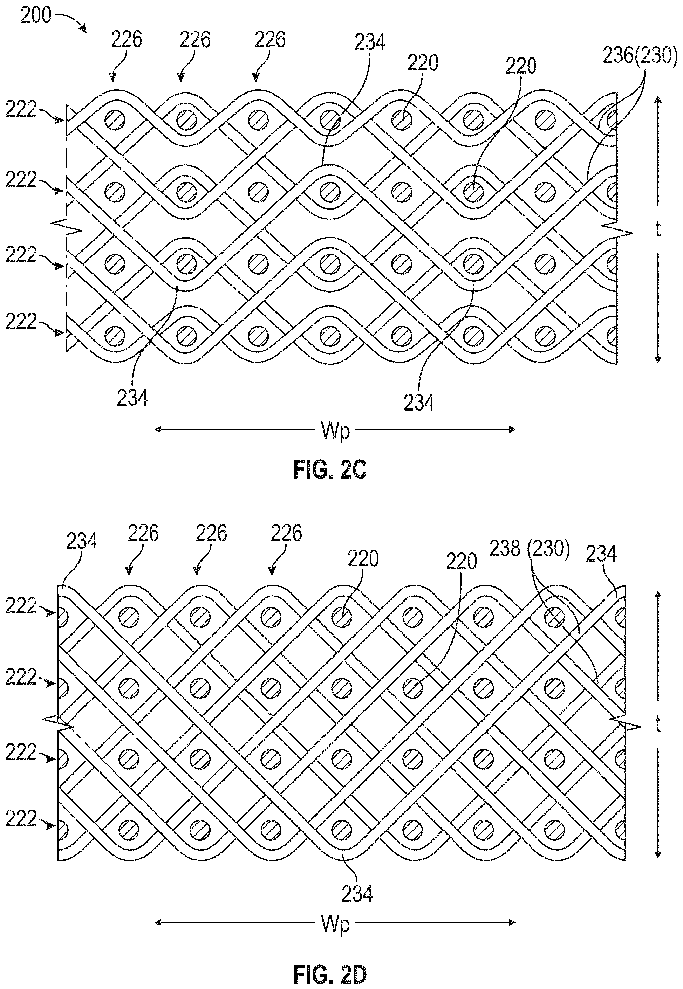

A second interlocking fiber pattern, shown in FIG. 2C, is an angle interlock pattern and, more specifically, a layer-to-layer angle interlock pattern. FIG. 2C is a cross-sectional view of a woven fabric taken from a perspective similar to that of FIG. 2B. The interlocking fiber tows 230 are referred to in this embodiment as angled interlocking fiber tows 236. Instead of extending orthogonally through the woven fabric 200, the angled interlocking fiber tows 236 form an oblique angle relative to the warp direction Wp. In the depicted embodiment, the angled interlocking fiber tows 236 extend through adjacent weft fiber layers 222 in an alternating or a sinusoidal pattern to interlock these adjacent layers with each other, with the oblique angle formed between adjacent turnaround portions 234 of the angled interlocking fiber tows 236. The turnaround portions 234 of the angled interlocking fiber tows 236 are located on every other weft fiber columns 226, but, in other embodiments, two or more weft fiber columns 226 may be between adjacent turnaround portions 234 of the angled interlocking fiber tows 236. In other embodiments, the angled interlocking fiber tows 236 may extend through more than two adjacent weft fiber layers 222. For example, as shown in FIG. 2D, the interlocking fiber tows 230 are through-thickness interlocking fiber tows, which are referred to herein as through-thickness angled interlocking fiber tows 238. FIG. 2D is a cross-sectional view of a woven fabric taken from a perspective similar to that of FIG. 2B. The weft fiber tows 220 are omitted in FIGS. 2C and 2D for clarity.

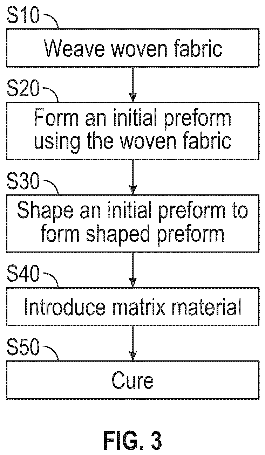

FIG. 3 is a flow chart of a general process of manufacturing a composite component that may be used in the turbine engine 100 of FIG. 1. The method includes, in step S10, weaving the woven fabric 200, such as on a loom. In step S20, the method includes forming or preparing a preform and, more specifically, an initial preform using one or more pieces of woven fabric 200. This step may include, for example, laying up a plurality of woven fabrics 200 or otherwise positioning the plurality of woven fabrics 200 relative to each other to form the initial preform. In step S30, the initial preform is shaped to form a shaped preform. Shaping the initial preform may include, for example, using a mold tool to shape the initial preform. Suitable shaping processes may include vacuum forming or other forming processes to impart a shape to the initial preform. The shaped preform may form a final preform, but, optionally, additional machining processes and manufacturing processes, such as adding filler material, may be carried out on the shaped preform to form the final preform.

In step S40, a matrix material is introduced into the preform. For example, after the preform is complete (i.e., the final preform), a matrix material may be injected into the preform in step S40 to generate an infiltrated (or an impregnated) preform. When the composite component is a polymer matrix composite, polymers, a resin, or both, may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes be used in this step depending upon the matrix material. The matrix material may be introduced in other ways. As noted above, the preform may be formed using prepreg fiber tows to introduce a matrix material, and, in such an embodiment, the matrix material is introduced when the reinforcing fiber tows 202 (FIG. 2A) are woven into the preform (step S10) or when the reinforcing fiber tows 202 are otherwise laid up. When prepreg fiber tows are used, an explicit step of injecting a resin material may be omitted.

The method continues with curing the infiltrated preform in step S50 to bond the composite material and, more specifically, the matrix together forming the composite component. The curing process depends upon the materials used, such as the matrix material used, and can include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material.

Further, the composite component may be finish machined as needed. Finish machining may define the final finished shape or the contour of the composite component. For example, when the composite component is a fan blade 152 (FIG. 1), the edges of the fan blade 152 may be machined to define the final shape or the contour of the airfoil. Additionally, the composite component can be coated with one or more suitable coatings, such as, e.g., an environmental barrier coating (EBC) or a polyurethane surface coating.

FIG. 4 is a schematic aft-looking view of the guide vane structure 170. The guide vane structure 170 is shown as being a guide vane structure that includes the outlet guide vanes 158 shown in FIG. 1 and that is arranged downstream of the fan 150, but the present disclosure is equally applicable for other types of guide vane structures, including inlet guide vane structures and stator vane structures that may be included, for example, within the compressor section 110 or within the turbine section 130. The discussion of the guide vane structure 170 is also applicable to other frame structures of the turbine engine 100, such as a forward frame and an aft frame defining a portion of the core air flow path 140, and supporting the HP shaft 108 and the LP shaft 109 via bearings.

As shown in FIG. 4, the guide vane structure 170 includes the outer shell 172 that extends circumferentially about a guide vane structure centerline axis 101', which is congruent to the longitudinal centerline axis 101 of the turbine engine 100, and also extends in the axial direction A (FIG. 1). The guide vane structure 170 also includes the inner hub 174 that extends circumferentially about the guide vane structure centerline axis 101' and that extends in the axial direction A. Each guide vane 158 extends between the inner hub 174 and the outer shell 172, and the guide vanes 158 are circumferentially spaced apart from one another about the guide vane structure centerline axis 101'. The outlet guide vanes 158 can also be referred to as struts. These struts can be aerodynamically contoured. The plurality of outlet guide vanes 158 may also be referred to herein as a plurality of struts. The plurality of struts (e.g., the plurality of outlet guide vanes 158) connects the inner hub 174 with the outer shell 172. The plurality of struts (e.g., the plurality of outlet guide vanes 158) extends in the radial direction R of the turbine engine 100.

The guide vane structure 170 shown in FIG. 4 includes a mounting bracket assembly 300. The mounting bracket assembly 300 shown in FIG. 4 is an engine mount, but the discussion of the mounting bracket assembly 300 can apply to other mounts and mounting structures that are attached to the frame (e.g., the guide vane structure 170). The mounting bracket assembly 300 includes an outer mounting structure 310. The outer mounting structure is formed on the outer shell 172. More specifically, the outer shell 172 has an outer surface 176, and the mounting bracket assembly 300 is formed on the outer surface 176 of the outer shell 172. The outer mounting structure 310 includes an outer flange 320, which will be discussed in more detail below. The outer mounting structure 310 also includes a frame connector 312 to which various components can be connected. In the depicted example, the frame connector 312 is a connector for the engine mount to connect, using an appropriate strut or other linkage, the turbine engine 100 to an aircraft, such as the wing of an aircraft in an under the wing configuration. The frame connector 312 can be located on other portions of the mounting bracket assembly 300, such as within the inner hub 174. The inner hub 174 can have an inner surface 178 and the mounting bracket assembly 300 can be formed on the inner surface 178 of the inner hub 174.

Various different frame connectors can be used as the frame connector 312 that are appropriate for the components and structures being attached thereto. As depicted in FIG. 4, the frame connector 312 is a clevis including a clevis body 314 with a pin receiver 316 formed therein. The pin receiver 316 can be a passage, such as a circular cylindrical passage for a clevis pin (not shown) to be inserted therethrough. The frame connector 312 can include a plurality of clevis bodies 314, each with a pin receiver 316 formed therein.

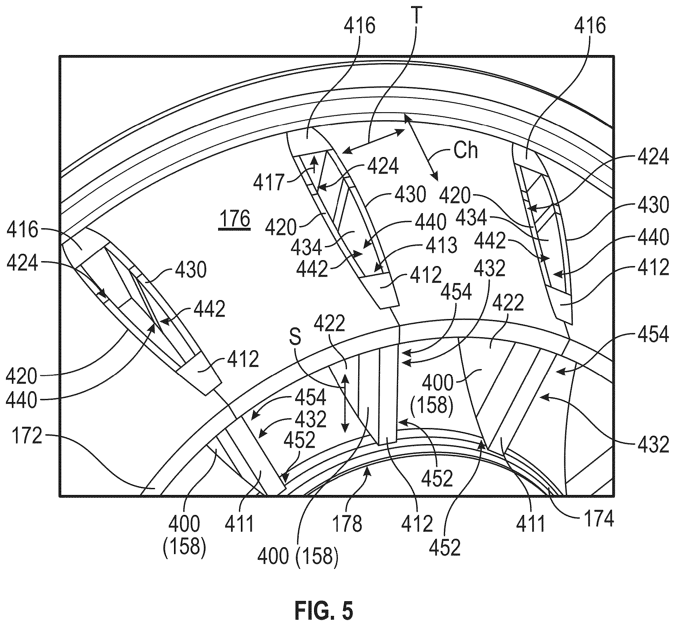

FIG. 5 is a schematic top view of the guide vane structure 170 with the mounting bracket assembly 300 (FIG. 4) omitted for clarity. At least one strut (e.g., one of the outlet guide vanes 158) of the plurality of struts (e.g., the plurality of outlet guide vanes 158) can be a hollow strut 400 with a radial passage 440 extending therethrough. The frame assembly (e.g., the guide vane structure 170) can include a plurality of hollow struts 400. The hollow struts 400 can be positioned adjacent to each other. The following discussion is made with reference to one hollow strut 400, but can be applicable to each of the hollow struts 400 of the frame (e.g., the guide vane structure 170).

The hollow strut 400 includes a leading edge 411 formed on a leading portion 412 of the hollow strut 400 and a trailing edge 415 (shown in FIG. 4) formed on a trailing portion 416 of the hollow strut 400. The hollow strut 400 includes a first wall 420 and a second wall 430, each connecting the leading portion 412 with the trailing portion 416. The first wall 420 includes a first outer surface 422, and the second wall 430 includes a second outer surface 432. The first outer surface 422 and the second outer surface 432 are formed on each side of the airfoil between the leading edge 411 and the trailing edge 415. The first outer surface 422 and the second outer surface 432 are located on opposite sides of the hollow strut 400 and form the outer surfaces of the hollow strut 400. As can be seen in FIG. 4, the hollow strut 400 is a symmetric airfoil. The hollow strut 400 may have any suitable shape, however, including, for example, concave surfaces, and the hollow strut 400 may be a cambered airfoil, with the first outer surface 422 being a suction surface having a convex curvature and the second outer surface 432 being a pressure surface that is generally flat. The hollow strut 400 also includes a chordwise direction Ch extending from the leading edge 411 to the trailing edge 415. A thickness direction T of the hollow strut 400 is perpendicular to the chordwise direction Ch.

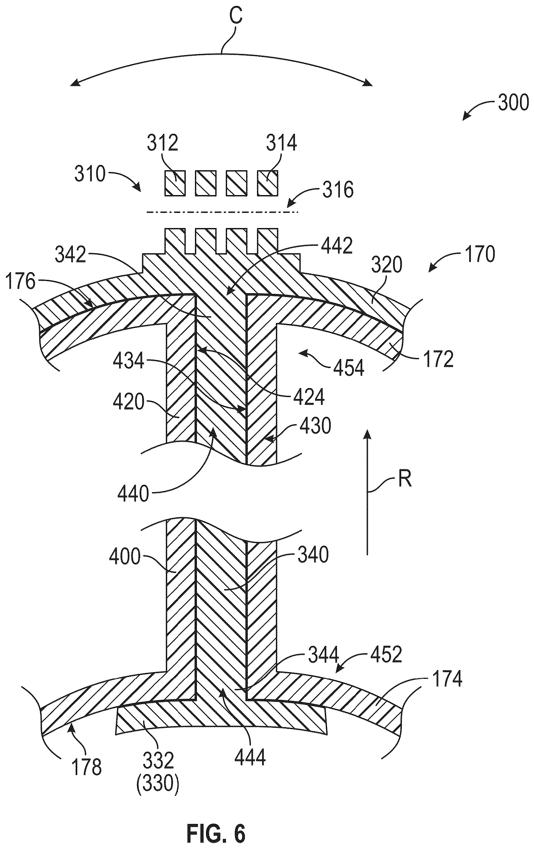

The hollow strut 400 is a hollow airfoil having a radial passage 440 formed therein. The radial passage 440 can help reduce the weight of the hollow strut 400 and thus the overall weight of the turbine engine 100. The radial passage 440 is defined between the first wall 420 and the second wall 430. More specifically, the first wall 420 includes a first inner surface 424, and the second wall 430 includes a second inner surface 434. The first inner surface 424 and the second inner surface 434 each defines, at least in part, the radial passage 440. The leading portion 412 and the trailing portion 416 can also define the radial passage 440 together with the first wall 420 and the second wall 430. More specifically, the leading portion 412 and the trailing portion 416 can each includes inner surfaces, a leading portion inner surface 413, and a trailing portion inner surface 417, respectively. The leading portion inner surface 413 and the trailing portion inner surface 417 each also defines, at least in part, the radial passage 440. The radial passage 440 is an open passage with an outer opening 442 formed in the outer surface 176 of the outer shell 172 and an inner opening 444 (FIG. 6) formed in the inner surface 178 of the inner hub 174. The radial passage 440 extends from the outer opening 442 to the inner opening 444.

The hollow strut 400 includes an inner end portion 452 and an outer end portion 454. The hollow strut 400 includes also a spanwise direction S (see also FIG. 1), and the hollow strut 400 extends in the spanwise direction S from the inner end portion 452 to the outer end portion 454. The spanwise direction S can be perpendicular to each of the chordwise direction Ch and the thickness direction T of the hollow strut 400. Each of the inner end portion 452 and the outer end portion 454 can be connected to a frame, a case, or other support structure to span therebetween. In this example, when the hollow strut 400 is the outlet guide vane 158, the hollow strut 400 is connected on the inner end portion 452 to the inner hub 174 and on the outer end portion 454 to the outer shell 172. Each of the leading portion 412, the trailing edge 415, the first wall 420, the second wall 430 (see FIG. 4), and the radial passage 440 can extend the full length of the hollow strut 400 in the spanwise direction S.

As noted above, the guide vane structure 170, including the outlet guide vanes 158, can be a composite component. The hollow strut 400 can be a composite component comprised of a matrix material formed around the reinforcing fiber tows 202 (FIG. 2A). The composite material may be, for example, a polymer matrix composite (PMC). The hollow strut 400, formed from a preform, can be formed of one or more woven fabrics 200 (FIG. 2A). The woven fabric 200 (FIG. 2A) and methods of forming the composite materials discussed above can be used to form the hollow strut 400 and other composite components of the guide vane structure 170. Alternatively, the reinforcing fiber tows 202 can be laid up using other methods, such as tape layup methods or two-dimensional woven fabric layup methods. Forming the hollow strut 400 (e.g., the outlet guide vanes 158), the outer shell 172, and the inner hub 174 from a composite material can be one way to form the frame (e.g., the guide vane structure 170) as an integral assembly, such as a monolithic structure. As noted above, however, the methods discussed herein may be used with other materials, and thus the hollow strut 400 may be formed from these other materials. Further, the hollow strut 400 may be a ceramic matrix composite (CMC).

FIG. 6 is a schematic, cross-sectional view of a portion of the guide vane structure 170 shown in FIG. 4 taken along line 6-6 in FIG. 4. FIG. 6, illustrates how the mounting bracket assembly 300 is connected to the frame (e.g., the guide vane structure 170). As noted above, the mounting bracket assembly 300 includes an outer flange 320. The outer flange 320 can be part of the outer mounting structure 310. The outer flange 320 is located radially outward of the outer shell 172. More specifically, the outer flange 320 is located on the outer surface 176 of the outer shell 172. For example, the outer flange 320 can be in contact with the outer surface 176 of the outer shell 172, such as abutting the outer surface 176. The mounting bracket assembly 300 can also include an inner flange 330. The inner flange 330 is located radially inward of the inner hub 174. More specifically, the inner flange 330 is located on the inner surface 178 of the inner hub 174. For example, the inner flange 330 can be in contact with the inner surface 178 of the inner hub 174, such as abutting the inner surface 178.

The mounting bracket assembly 300 also includes a radial linkage 340 connecting the inner flange 330 with the outer flange 320. The radial linkage 340 includes an outer end 342. The outer flange 320 is located on, such as connected to, the outer end 342 of the radial linkage 340. The radial linkage 340 also includes an inner end 344. The inner flange 330 is located on, such as connected to, the inner end 344 of the radial linkage 340. The radial linkage 340 extends through the radial passage 440 of the hollow strut 400. The radial linkage 340 can be located in the radial passage 440 such that the outer end 342 projects through the outer opening 442 for the outer flange 320 to be connected thereto. Similarly, the radial linkage 340 can be located in the radial passage 440 such that the inner end 344 projects through the inner opening 444 for the inner flange 330 to be connected thereto. The radial linkage 340 can thus extend from the outer shell 172 to the inner hub 174.

The radial linkage 340 can be integrally formed with the outer flange 320, the inner flange 330, or both, and the radial linkage 340 can form an integral structure with the outer flange 320, the inner flange 330, or both. In FIG. 6, for example, the radial linkage 340 is integrally formed with each of the outer flange 320 and the inner flange 330, such as the radial linkage 340 being formed as a monolithic structure with the outer flange 320 and the inner flange 330. For clarity with other inner flanges 330 discussed herein, the inner flange 330 shown in FIG. 6 may be referred to as an integral inner flange 332.

The mounting bracket assembly 300, or portions thereof, can be a composite component comprised of a matrix material formed around the reinforcing fiber tows 202 (FIG. 2A). The composite material may be, for example, a polymer matrix composite (PMC). The mounting bracket assembly 300 can be formed from a preform formed of one or more woven fabrics 200 (FIG. 2A). The woven fabric 200 (FIG. 2A) and methods of forming the composite materials discussed above can be used to form the mounting bracket assembly 300. For example, the one or more woven fabrics 200 can be laid up to form a preform for the mounting bracket assembly 300 and then cured, as discussed above, to form a monolithic composite structure. Alternatively, the reinforcing fiber tows 202 can be laid up using other methods, such as tape layup methods or two-dimensional woven fabric layup methods. As noted above, however, the methods discussed herein may be used with other materials, and thus the hollow strut 400 may be formed from these other materials, and the hollow strut 400 may be a ceramic matrix composite (CMC). The mounting bracket assembly 300 can be formed from other materials, such as metal alloys suitable for use in the aircraft environment.

The outer flange 320 extends outward in the circumferential direction C from the radial linkage 340. As shown in FIG. 6, for example, the outer flange 320 extends outward from the radial linkage 340 in both a clockwise circumferential direction C and a counterclockwise circumferential direction C. The outer flange 320 has a width in the circumferential direction C that is greater than the width in the circumferential direction C of the radial passage 440. Similarly, the inner flange 330 extends outward in the circumferential direction C from the radial linkage 340. As shown in FIG. 6, for example, the inner flange 330 extends outward from the radial linkage 340 in both a clockwise circumferential direction C and a counterclockwise circumferential direction C. The inner flange 330 has a width in the circumferential direction C that is greater than the width in the circumferential direction C of the radial passage 440. With the location of the outer flange 320 and the inner flange 330, the outer shell 172, the inner hub 174, and the hollow strut 400 are sandwiched therebetween. This configuration thus prevents, or limits, radial movement of the mounting bracket assembly 300 and securely connects the mounting bracket assembly 300 to the frame (e.g., the guide vane structure 170).

To limit axial movement of the mounting bracket assembly 300, such as movement in the axial direction A (FIG. 4), the length of the radial linkage 340 in the chordwise direction may be the same as the length in the chordwise direction Ch (FIG. 5) of the radial passage 440. For example, the radial linkage 340 can be sized and positioned to abut the leading portion inner surface 413 (FIG. 4), the trailing portion inner surface 417 (FIG. 4), or both. To limit circumferential movement of the mounting bracket assembly 300, such as movement in the circumferential direction C, the width of the radial linkage 340 in the circumferential direction C (i.e., a thickness direction) may be the same as the width in the circumferential direction C (i.e., a thickness direction) of the radial passage 440. For example, the radial linkage 340 can be sized and positioned to abut the first inner surface 424, the second inner surface 434, or both. The hollow strut 400, is positioned to circumscribe the radial linkage 340. More specifically, the first wall 420, the second wall 430, the leading portion 412, and the trailing portion 416 are positioned to circumscribe the radial linkage 340. The outer flange 320, the inner flange 330, or both, can be plate structures, such as an arcuate plate structure. With the inner flange 330 and outer flange 320 integrally formed with the radial linkage 340, the hollow strut 400 can be formed around the mounting bracket assembly 300, such as formed around the radial linkage 340, to position the mounting bracket assembly 300 in the hollow strut 400 and the guide vane structure 170.

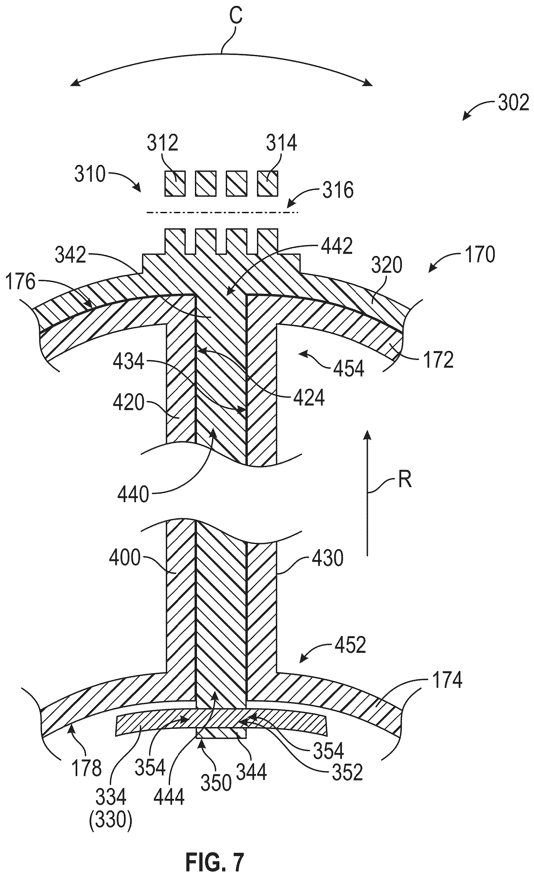

FIGS. 7 to 12 show mounting bracket assemblies that may be used and positioned similarly to the mounting bracket assembly 300 discussed above with reference to FIG. 6. The same reference numerals are used for the same or similar components of the mounting bracket assemblies shown and described below, and the discussion of such features may be omitted. The discussion of the mounting bracket assembly 300 and corresponding features applies to the discussion below unless otherwise noted.

FIG. 7 is a schematic, cross-sectional view, taken from a perspective similar to that of FIG. 6, of a portion of the guide vane structure 170 having a mounting bracket assembly 302. In FIG. 6, the inner flange 330 is an integral inner flange 332. The inner flange 330, however, can be formed as a separate component, such as a discrete component, and connected or fastened to the radial linkage 340. For clarity with the other inner flanges 330 discussed herein, the inner flange 330 shown in FIG. 7 may be referred to herein as a discrete inner flange 334. If the hollow strut 400 is formed initially, the radial linkage 340 can be inserted through the outer opening 442 and into the radial linkage 340 until the inner end 344 projects out of the inner opening 444. After the inner end 344 is positioned in the radial passage 440, the discrete inner flange 334 can be engaged with the mounting bracket assembly 302, such as engaged with the inner end 344 to secure the mounting bracket assembly 302 with the 400 and the guide vane structure 170, as discussed above.

The radial linkage 340 can have a flange connector 350 formed therein or attached thereto. The discrete inner flange 334 can be connected to the flange connector 350 after the radial linkage 340 is positioned in the radial passage 440. More specifically, the flange connector 350 shown in FIG. 7 is formed in the inner end 344 of the radial linkage 340. Various suitable flange connectors 350 can be used and the discrete inner flange 334 can be engaged with the radial linkage 340 in various different ways. As depicted in FIG. 7, for example, the flange connector 350 includes a flange receiver 352. The flange receiver 352 can be a slot extending through the thickness of the radial linkage 340 and being elongated in the chordwise direction Ch (FIG. 5) of the radial linkage 340. The flange receiver 352 can include flange apertures 354 formed on either side of the radial linkage 340. The outer flange 320 can be a plate, such as an arcuate plate, that is then inserted through the flange receiver 352 to project outwardly from the radial linkage 340 as discussed above. The flange receiver 352 can be fastened to the radial linkage 340 after being engaged therewith. Instead of the plate structure, the mounting bracket assembly 302 can include a plurality of discrete inner flanges 334, such as a plurality of discrete inner flanges 334 positioned in the chordwise direction Ch (FIG. 5) of the radial linkage 340. The radial linkage 340 can thus also include plurality of flange receivers 352 into which the plurality of discrete inner flanges 334 can be engaged. The discrete inner flange 334 can be pins or bars.

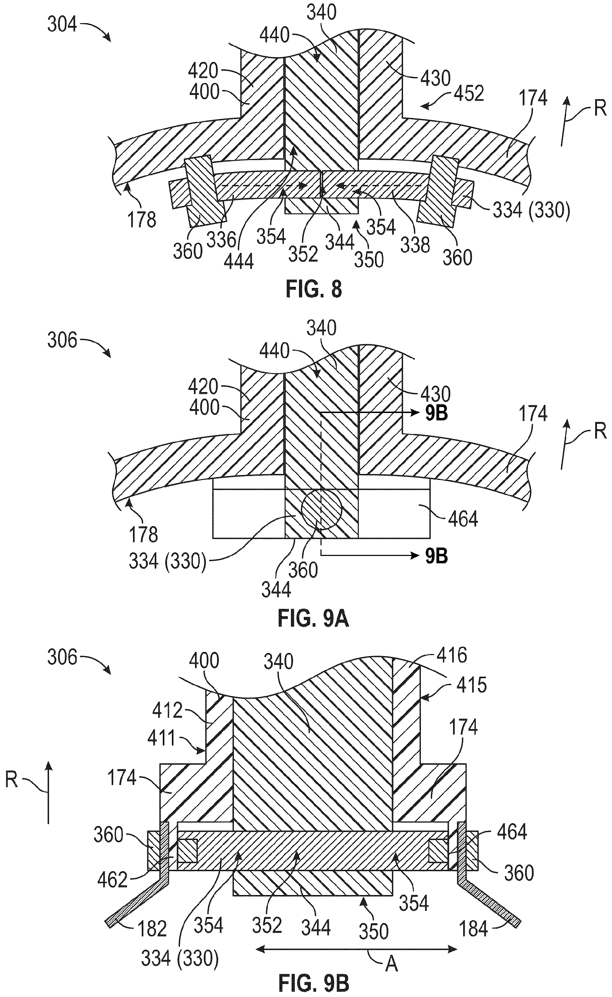

FIG. 8 is a schematic, cross-sectional view of an inner portion of the guide vane structure 170 and an inner portion of a mounting bracket assembly 304. In FIG. 7, the discrete inner flange 334 was shown as a single piece. In FIG. 8, the discrete inner flange 334 comprises a plurality of sections. More specifically, the discrete inner flange 334 shown in FIG. 8 includes a first inner flange section 336 and a second inner flange section 338. Each of the first inner flange section 336 and the second inner flange section 338 are engageable with one or more flange connectors 350 of the radial linkage 340. The first inner flange section 336 has one end that can be inserted through one of the flange apertures 354 of the flange receiver 352. Similarly, the second inner flange section 338 has one end that can be inserted through one of the flange apertures 354 of the flange receiver 352. The first inner flange section 336 extends from one side of the radial linkage 340. The second inner flange section 338 is located on an opposite side of the radial linkage 340 from the first inner flange section 336 and extends from the other side of the radial linkage 340.

To further secure the mounting bracket assembly 304 to the guide vane structure 170, the discrete inner flange 334 can be fastened to the guide vane structure 170. As shown in FIG. 8, for example, the discrete inner flange 334 is fastened to the inner hub 174 by one or more fasteners 360. Each fastener 360 can engage with both the discrete inner flange 334 and the inner hub 174, such as by being inserted through the discrete inner flange 334 and engaging with the inner hub 174 using, for example, threads. Each fastener 360 can engage with the inner hub 174 through the inner surface 178 of the inner hub 174 and extend in the radial direction R.

When the discrete inner flange 334 incudes a plurality of sections, a corresponding fastener 360 can engage with each section of the plurality of sections. For example, one fastener 360 can engage with the first inner flange section 336, and another fastener 360 can engage with the second inner flange section 338. With such an arrangement, the fasteners 360 secure each of the first inner flange section 336 and the second inner flange section 338 within the flange connector 350 and prevent them from sliding out of the flange receiver 352. These fasteners 360 can also be used with other mounting bracket assemblies discussed herein, such as those discussed above.

FIG. 9A is a schematic, cross-sectional views of an inner portion of the guide vane structure 170 and an inner portion of a mounting bracket assembly 306. FIG. 9B is cross-sectional view taken along line 9B-9B in FIG. 9A. In FIG. 8, the mounting bracket assembly 304 is fastened to the guide vane structure 170. More specifically, the discrete inner flange 334 is fastened to the inner hub 174 using fasteners that extend in the radial direction R to engage with the inner hub 174 through the inner surface 178. Other configurations may be used. Each mounting bracket assembly 306 shown in FIGS. 9A and 9B is fastened to the inner hub 174 using a fastener 360 that is oriented in the axial direction A. The inner hub 174 can include, for example, a leading flange 462 and a trailing flange 464. The leading flange 462 can be located on a leading side of the inner hub 174 in the axial direction A, and the trailing flange 464 can be on a trailing side of the inner hub 174 in the axial direction A. Each of the leading flange 462 and the trailing flange 464 can extend radially inward from the inner hub 174. The discrete inner flange 334 can also be oriented in the axial direction A. One fastener 360 can be used to fasten the leading flange 462 with the discrete inner flange 334, and another fastener 360 can be used to fasten trailing flange 464 with the discrete inner flange 334. As shown, for example in FIGS. 9A and 9B, the fasteners 360 can extend in the axial direction A. This construction can be used to connect the inner hub 174 with adjacent components. For example, one fastener 360 can also fasten forward hardware 182 to the leading flange 462, and the other fastener 360 can fasten aft hardware 184 to the trailing flange 464.

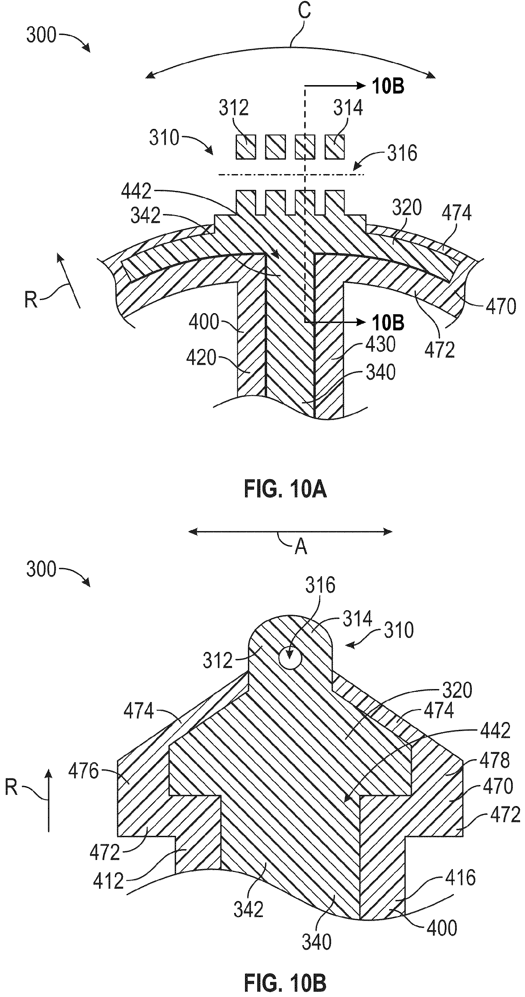

FIGS. 10A and 10B are schematic, cross-sectional views of an outer portion of the guide vane structure and an outer portion of a mounting bracket assembly. FIG. 10B is a schematic, cross-sectional view taken along line 10B-10B in FIG. 10A. As noted above, the mounting bracket assembly 300 can be co-molded with the guide vane structure 170 when the guide vane structure 170 is formed form a composite material. The reinforcing fiber tows 202 (FIG. 2A) can be laid up to surround the outer flange 320, to embed the mounting bracket assembly 300 within the guide vane structure 170. More specifically, the outer flange 320 can be embedded in and surrounded by an outer shell 470 of the guide vane structure 170. The outer shell 470 is similar to the outer shell 172, discussed above. As shown in FIG. 10A and 10B, for example, the reinforcing fiber tows 202 can be laid up to form an inner outer-shell section 472 that is underneath the outer flange 320, and an outer outer-shell section 474 that is on top of the outer flange 320. The inner outer-shell section 472 and the outer outer-shell section 474 can connect to each other to enclose the outer flange 320 within the outer shell 172. For example, the inner outer-shell section 472 and the outer outer-shell section 474 can connect to each other on the circumferential ends of the outer flange 320. Similarly, the reinforcing fiber tows 202 can be laid up to form a leading outer-shell section 476 and a trailing outer-shell section 478. The leading outer-shell section 476 connects the inner outer-shell section 472 with the outer outer-shell section 474 on a leading portion of the outer shell 470, and the trailing outer-shell section 478 connects the inner outer-shell section 472 with the outer outer-shell section 474 on a trailing portion of the outer shell 470. Once the reinforcing fiber tows 202 are laid up and the processing steps completed (see FIG. 3, above), the mounting bracket assembly 300 can be co-molded with the outer shell 470.

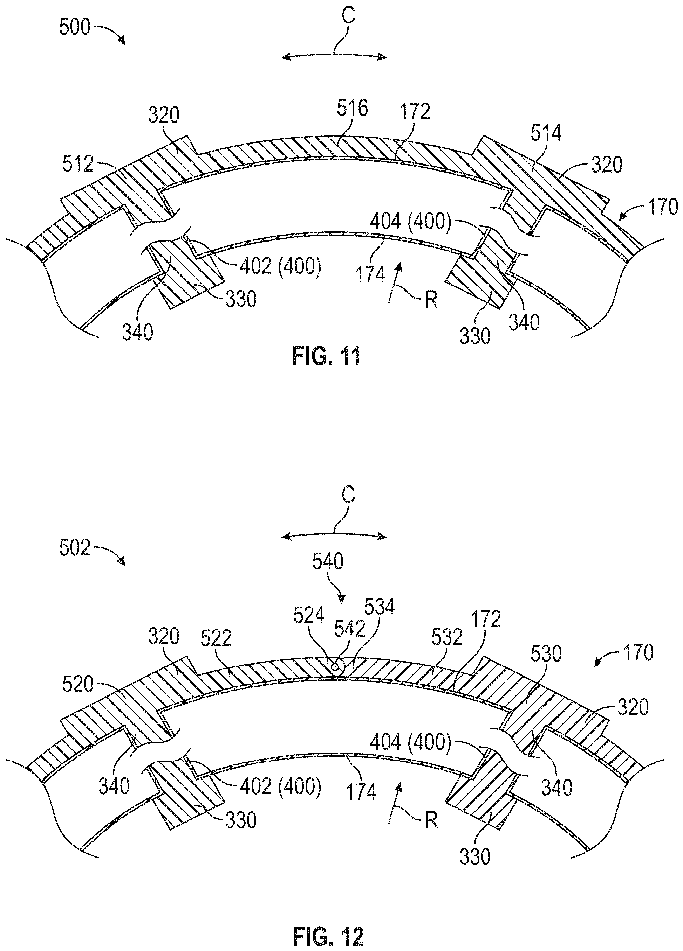

FIG. 11 is a schematic, cross-sectional view, taken from a perspective similar to that of FIG. 6, of a portion of the guide vane structure 170 having an alternative mounting bracket assembly 500. Additional strength and attachment points can be used as desired. The mounting bracket assembly 500 shown in FIG. 11 engages with a plurality of hollow struts 400. For example, the mounting bracket assembly 500 can engage with two hollow struts 400, such as a first hollow strut 402 and a second hollow strut 404. The first hollow strut 402 and the second hollow strut 404 are shown as adjacent hollow struts 400, but additional struts may be positioned therebetween. The mounting bracket assembly 500 includes a first mounting bracket portion 512 and a second mounting bracket portion 514. The first mounting bracket portion 512 engages the first hollow strut 402, and the second mounting bracket portion 514 engages the second hollow strut 404. Each of the first mounting bracket portion 512 and the second mounting bracket portion 514 can be formed in a manner similar to any one of the mounting bracket assemblies discussed herein, with the outer flange 320 connected to the inner flange 330 by a radial linkage 340. FIG. 11 depicts the mounting bracket assembly 300 shown in FIG. 6. The outer flange 320 of the first mounting bracket portion 512 can be integrally formed with the outer flange 320 of the second mounting bracket portion 514, such as by an integral flange portion 516 that extends from the radial linkage 340 of the first mounting bracket portion 512 to the radial linkage 340 of the second mounting bracket portion 514.

FIG. 12 is a schematic, cross-sectional view, taken from a perspective similar to that of FIG. 6, of a portion of the guide vane structure 170 having an alternative mounting bracket assembly 502. The mounting bracket assembly 502 shown in FIG. 12 is similar to the mounting bracket assembly 500 shown in FIG. 11, but, instead of having the integral flange portion 516, the mounting bracket assembly 502 is formed by a first mounting bracket 520 and a second mounting bracket 530. The first mounting bracket 520 can be positioned in a manner similar to the first mounting bracket portion 512 discussed above and can be constructed similarly to any one of the mounting bracket assemblies discussed herein. The second mounting bracket 530 can be positioned in a manner similar to the second mounting bracket portion 514 discussed above and can be constructed similarly to any one of the mounting bracket assemblies discussed herein. The first mounting bracket 520 includes a first outer flange 522 and the second mounting bracket 530 includes a second outer flange 532. The first outer flange 522 and the second outer flange 532 can be connected to each other, such as by a hinge 540. The hinge 540 can be a piano hinge, for example, with a first outer flange hinge body 524 formed on one end of the first outer flange 522 and a second outer flange hinge body 534 formed on one end of the second outer flange 532. The first outer flange hinge body 524 can be positioned to engage the second outer flange hinge body 534. The first outer flange hinge body 524 and the second outer flange hinge body 534 can be engaged in an interlocking arrangement. Then, a hinge pin 542 can be inserted through pin receivers formed in the first outer flange hinge body 524 and the second outer flange hinge body 534 to connect the first outer flange 522 and the second outer flange 532 with each other.

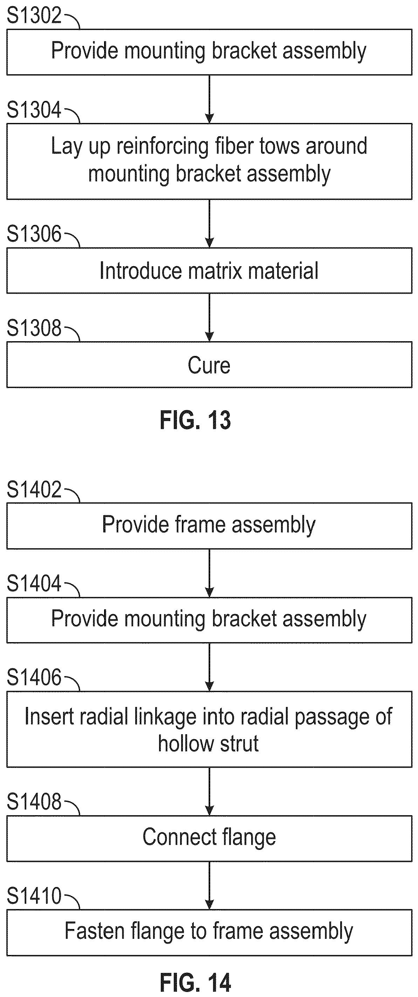

FIG. 13 is a flow chart of a method of forming a frame assembly, such as the guide vane structure 170, discussed above. The following method will be described using the mounting bracket assembly 300 discussed above with reference to FIG. 6. Other mounting bracket assemblies, including those described herein, can be used. In step S1302, the mounting bracket assembly 300 is provided. In some embodiments, the mounting bracket assembly 300 can be a composite mounting bracket assembly. In such embodiments, the method can also include forming the mounting bracket assembly 300 in advance or as part of the providing step using the composite manufacturing method described above with reference to FIG. 3.

In step S1304, reinforcing fiber tows 202 are laid up around at least a portion of the mounting bracket assembly 300 to form a preform of the frame. Laying up the fibers and forming the preform of the frame can be carried out using, for example, steps S20 and S30 of the method described above with reference to FIG. 3. The reinforcing fibers can be laid up around the radial linkage 340 to form the hollow strut 400, as discussed above with reference to FIGS. 5 and 6. In some embodiments, the reinforcing fibers can also be laid up as discussed above with reference to FIGS. 10A and 10B to enclose the outer flange 320 within the outer shell 172.

In step S1306, the matrix material is introduced into the preform. Introducing the matrix material can be carried out using step S40 of the method described above with reference to FIG. 3. In step S1308, the preform is cured. Curing can be carried out using step S50 of the method described above with reference to FIG. 3. This method forms the frame assembly (e.g., the guide vane structure 170) formed as an integral composite structure with the mounting bracket assembly 300 embedded within the frame, such as the guide vane structure 170.

FIG. 14 is a flow chart of another method of forming a frame assembly, such as the guide vane structure 170, discussed above. The following method will be described using the mounting bracket assembly 302 discussed above with reference to FIG. 7. Other mounting bracket assemblies, including those described herein, can be used.

In step S1402, the frame assembly (e.g., the guide vane structure 170) is provided. The frame assembly includes, as discussed above with reference to FIGS. 4 and 5, the outer shell 172, the inner hub 174, and the plurality of struts extending including the hollow strut 400. In some embodiments, the frame assembly can be a composite structure. In such embodiments, forming the frame assembly includes laying up reinforcing fibers and consolidating them into the composite using the process steps described above with reference to FIG. 3.

In step S1404, the mounting bracket assembly 302 is provided. The mounting bracket assembly 302 includes the outer flange 320, the radial linkage 340, and the inner flange 330. In some embodiments, the mounting bracket assembly 302 can also be a composite structure. In such embodiments, forming the mounting bracket assembly 302 can be formed using the composite manufacturing method described above with reference to FIG. 3, either as part of the providing step or in advance.

In step S1406, the radial linkage 340 is inserted into the radial passage 440 of the hollow strut 400. The insertion is carried out while at least one of the inner flange 330 or the outer flange 320 is separate from the radial linkage 340. In the embodiment shown in FIG. 7, the outer flange 320 is integrally formed with the radial linkage 340 and the inner flange 330 is provided as the discrete inner flange 334 for connection after insertion. When the radial linkage 340 is inserted the discrete inner flange 334 can be separate from the rest of the mounting bracket assembly 302, such as separate from the radial linkage 340.

In step S1408, the inner flange 330 is connected to the radial linkage 340. The connection can be achieved using the flange connector 350 as discussed above with reference to FIG. 7. The discrete inner flange 334 can be inserted into the flange receiver 352 and secured in place, in the manner discussed above.

In some embodiments, the discrete inner flange 334 can include multiple sections, such as the first inner flange section 336 and the second inner flange section 338, as discussed above with reference to FIG. 8. In these embodiments, each flange section is inserted into the flange connector 350 from opposite sides of the radial linkage 340. Each flange section can then be fastened to the inner hub 174 with fasteners 360, as shown in FIG. 8. In other embodiments, the discrete inner flange 334 can be connected to the inner hub 174 using fasteners 360 that extend axially, as discussed above with reference to FIGS. 9A and 9B. In this configuration, the inner hub 174 includes the leading flange 462 and the trailing flange 464, and the fasteners 360 extend in the axial direction to secure the discrete inner flange 334 together with forward hardware 182 and aft hardware 184. In these embodiments, the method can include, as step S1410, fastening the inner flange 330 to the inner hub 174.

The methods shown in FIGS. 13 and 14 have been described above with reference to mounting bracket assembly that includes a single radial linkage. The method can also be applied in a similar manner to mounting bracket assemblies that include a plurality of radial linkages, such as those discussed above with reference to FIGS. 11 and 12.

Various mounting bracket assemblies are disclosed herein that provide attachment solutions for turbine engine frames, particularly integral composite frames. The disclosed assemblies address the challenge of integrating engine mounts and other hardware into weight-optimized structures, such as composite structures, by incorporating either detachable mechanical features or co-molded mechanical features. These features are configured to cooperate with the frame and align with engine load paths, enabling effective transfer of loads between the engine and the aircraft structure. The disclosed assemblies preserve the structural efficiency and weight benefits of an integral frame, particularly an integral composite frame, while ensuring robust attachment capability for engine hardware.

Further aspects of the present disclosure are provided by the subject matter of the following clauses.

A frame assembly for a turbine engine of an aircraft. The frame assembly has a radial direction. The frame assembly includes a frame and a mounting bracket assembly. The frame includes an inner hub having an inner surface, an outer shell located opposite the inner hub and having an outer surface, and a plurality of struts connecting the inner hub with the outer shell. The plurality of struts extends in the radial direction. At least one strut of the plurality of struts is a hollow strut with a radial passage extending therethrough. The radial passage extends from an outer opening formed in the outer surface of the outer shell to an inner opening formed in the inner surface of the inner hub. The mounting bracket assembly includes an inner flange located on the inner surface of the inner hub, an outer flange located on the outer surface of the outer shell, and a radial linkage connecting the inner flange with the outer flange. The radial linkage extends through the radial passage of the hollow strut.

The frame assembly of the preceding clause, wherein the radial linkage is an integral structure with at least one of the inner flange or the outer flange.

The frame assembly of any preceding clause, wherein the radial linkage is an integral structure with the inner flange.

The frame assembly of any preceding clause, wherein the radial linkage includes an inner end portion, the inner end portion having one or more flange connectors, and wherein the inner flange comprises a plurality of sections, each section being engageable with the one or more flange connectors of the inner end portion to connect the inner flange with the radial linkage.

The frame assembly of the preceding clause, wherein each section of the inner flange is fastened to the inner hub by a fastener engaging with both the inner flange and the inner hub.

The frame assembly of any preceding clause, wherein the inner flange comprises a discrete inner flange fastened to the radial linkage.

The frame assembly of any preceding clause, wherein the inner flange comprises a plurality of discrete flange sections positioned on opposite sides of the radial linkage.

The frame assembly of any preceding clause, wherein the radial linkage is sized to abut a leading portion inner surface and a trailing portion inner surface of the hollow strut to limit axial movement.

The frame assembly of any preceding clause, wherein the radial linkage is sized to abut a first inner surface and a second inner surface of the hollow strut to limit circumferential movement.

The frame assembly of any preceding clause, wherein the hollow strut is a first hollow strut, and the mounting bracket assembly is a first mounting bracket assembly with the inner flange being a first inner flange, the outer flange being a first outer flange, and the radial linkage being a first radial linkage, wherein the plurality of struts includes a second hollow strut. The radial passage of the second hollow strut extends from an outer opening formed in the outer surface of the outer shell to an inner opening formed in the inner surface of the inner hub. The frame assembly further includes a second mounting bracket assembly. The second mounting bracket assembly including a second inner flange located on the inner surface of the inner hub, a second outer flange located on the outer surface of the outer shell, and a second radial linkage connecting the second inner flange with the second outer flange, the second radial linkage extending through the radial passage of the second hollow strut.

The frame assembly of the preceding clause, wherein the first outer flange and the second outer flange are integrally formed with each other.

The frame assembly of any preceding clause, wherein the first mounting bracket assembly and the second mounting bracket assembly share an integral flange portion connecting the first radial linkage and the second radial linkage.

The frame assembly of any preceding clause, wherein the first outer flange and the second outer flange are fastened to each other.

The frame assembly of any preceding clause, wherein the first outer flange and the second outer flange are fastened to each other by a hinge.

The frame assembly of the preceding clause, wherein the hinge includes interlocking hinge bodies and a hinge pin extending therethrough.

The frame assembly of any preceding clause, wherein the frame includes a composite comprising a plurality of reinforcing fibers positioned to embed at least a portion of the mounting bracket assembly within the frame.

The frame assembly of the preceding clause, wherein the outer shell is the composite and the plurality of reinforcing fibers are positioned to form an inner outer-shell section that is underneath the outer flange and an outer outer-shell section that is on top of the outer flange.

The frame assembly of any preceding clause, wherein the inner outer-shell section and the outer outer-shell section are connected to each other to enclose the outer flange within the outer shell.

The frame assembly of any preceding clause, wherein the frame is co-molded around at least a portion of the mounting bracket assembly.

The frame assembly of any preceding clause, wherein at least one of the inner flange, outer flange, or radial linkage is formed from a polymer matrix composite.

The frame assembly of any preceding clause, wherein at least one of the inner flange, outer flange, or radial linkage is formed from a ceramic matrix composite.

The frame assembly of any preceding clause, wherein at least one of the inner flange, outer flange, or radial linkage is formed from a metallic alloy.

The frame assembly of any preceding clause, wherein the radial linkage includes an inner end portion, the inner end portion having a flange connector, and wherein the inner flange is engageable with the flange connector of the inner end portion to connect the inner flange with the radial linkage.

The frame assembly of the preceding clause, wherein the flange connector is an aperture formed in the inner end portion of the radial linkage, the inner flange engaging with the inner end portion by being inserted into the aperture of the inner end portion.

The frame assembly of the preceding clause, wherein the inner flange is fastened to the inner hub by a fastener engaging with both the inner flange and the inner hub.

The frame assembly of the preceding clause, wherein the fastener engages with the inner hub through the inner surface of the inner hub and extends in the radial direction.

The frame assembly of any preceding clause, wherein the frame assembly has an axial direction, and wherein the inner hub includes an axial flange, the fastener engaging with the axial flange of the inner hub and extending in the axial direction.

The frame assembly of any preceding clause, wherein the mounting bracket assembly further includes an outer mounting structure, the outer mounting structure including the outer flange and a frame connector.

The frame assembly of the preceding clause, wherein the frame connector is a clevis including a clevis body with a pin receiver formed therein.

A turbine engine including the frame assembly of any of the preceding clauses, wherein the mounting assembly is an engine mount for the turbine engine.

The turbine engine of the preceding clause, wherein the mounting bracket assembly is configured to connect the turbine engine to an aircraft wing.

The turbine engine of any preceding clause, wherein the mounting bracket assembly is configured to route service lines through the hollow strut.

A method of forming a frame assembly for a turbine engine of an aircraft including providing a mounting bracket assembly having an inner flange, an outer flange, and a radial linkage extending therebetween. The method also including laying up reinforcing fibers around at least a portion of the mounting bracket assembly to form a preform of a frame including an inner hub, an outer shell, and a plurality of struts extending radially therebetween. The method further including infiltrating the preform with a matrix material and curing the matrix material to form the frame with the mounting bracket assembly embedded therein.

The method of the preceding clause, wherein laying up the reinforcing fibers includes forming an inner outer-shell section underneath the outer flange and an outer outer-shell section on top of the outer flange to enclose the outer flange within the outer shell.

The method of the preceding clause, wherein the inner outer-shell section and the outer outer-shell section are joined at circumferential ends of the outer flange.

The method of any preceding clause, wherein laying up the reinforcing fibers includes forming a leading outer-shell section and a trailing outer-shell section that connect the inner outer-shell section with the outer outer-shell section to enclose the outer flange.

The method of any preceding clause, wherein laying up the reinforcing fibers includes forming a hollow strut around the radial linkage to embed the radial linkage within the hollow strut, the hollow strut being one of the plurality of struts.

The method of any preceding clause, wherein the mounting bracket assembly is a first mounting bracket assembly, wherein the method further includes providing a second mounting bracket assembly including an inner flange, an outer flange, and a radial linkage extending therebetween, and wherein laying up the reinforcing fibers includes forming a first hollow strut around the radial linkage of the first mounting bracket assembly to embed the radial linkage within the first hollow strut and forming a second hollow strut around the radial linkage of the second mounting bracket assembly to embed the radial linkage within the second hollow strut, the first hollow strut and the second hollow strut each being one of the plurality of struts.

The method of the preceding clause, wherein the outer flange of each of the first mounting bracket assembly and the second mounting bracket assembly are integrally formed with one another as a unitary flange portion.

The method of any preceding clause, wherein the outer flange of each of the first mounting bracket assembly and the second mounting bracket assembly are joined by a hinge connection.

The method of the preceding clause, wherein the hinge connection comprises interlocking hinge bodies formed on the respective outer flanges and a hinge pin extending through the hinge bodies.

A method of forming a frame assembly for a turbine engine of an aircraft including providing a frame having an inner hub, an outer shell, and a plurality of struts extending radially therebetween. At least one strut is a hollow strut with a radial passage extending therethrough. The method also including providing a mounting bracket assembly including an inner flange, an outer flange, and a radial linkage extending therebetween. The method further including inserting the radial linkage of the mounting bracket assembly into the radial passage of the hollow strut while at least one of the inner flange or the outer flange is separate from the radial linkage, and connecting the at least one of the inner flange or the outer flange to the radial linkage such that the hollow strut is positioned between the inner flange and the outer flange.

The method of the preceding clause, further including forming the frame from composite material including a plurality of reinforcing fibers.

The method of any preceding clause, wherein the other one of the inner flange or the outer flange is integrally formed with the radial linkage.

The method of the preceding clause, wherein the outer flange is integrally formed with the radial linkage and the inner flange is connected after insertion.

The method of any preceding clause, wherein connecting the at least one of the inner flange or the outer flange includes inserting the flange into a flange receiver of the radial linkage.

The method of the preceding clause, wherein the flange receiver comprises a slot or passage formed in an end portion of the radial linkage, the slot or passage being elongated in a chordwise direction of the hollow strut to receive the flange.

The method of any preceding clause, wherein the radial linkage includes a plurality of flange receivers and the inner flange is formed from a plurality of discrete members inserted into the flange receivers.

The method of the preceding clause, wherein the plurality of discrete members comprise pins or bars that collectively form the inner flange.

The method of any preceding clause, wherein the inner flange comprises a plurality of flange sections, each section being inserted into a flange receiver of the radial linkage.

The method of the preceding clause, wherein the plurality of flange sections includes a first flange section extending from one side of the radial linkage and a second flange section extending from an opposite side of the radial linkage.

The method of any preceding clause, further including fastening each flange section to the inner hub with a fastener extending through the flange section and the inner hub.

The method of any preceding clause, wherein the flange sections are positioned on opposite sides of the radial linkage and secured against sliding movement relative to the flange receiver.

The method of any preceding clause, further including fastening the inner flange to the inner hub with a fastener extending in a radial direction.

The method of any preceding clause, further including fastening the inner flange to the inner hub with a fastener extending in an axial direction.

The method of the preceding clause, wherein the inner hub includes a leading flange and a trailing flange extending radially inward, and the inner flange is fastened to each of the leading flange and the trailing flange by corresponding axial fasteners.

The method of the preceding clause, further including fastening additional hardware to the leading flange or the trailing flange together with the inner flange using the corresponding axial fasteners.

The method of any preceding clause, wherein the at least one strut is a first hollow strut, and the frame includes a plurality of struts including the first hollow strut and a second hollow strut with a radial passage extending therethrough, wherein the mounting bracket assembly is a first mounting bracket assembly with the inner flange, the outer flange, and the radial linkage being a first inner flange, a first outer flange, and a first radial linkage, respectively.

The method of any preceding clause, wherein the method further includes providing a second mounting bracket assembly including a second inner flange, a second outer flange, and a second radial linkage extending therebetween; inserting the second radial linkage of the second mounting bracket assembly into the radial passage of the second hollow strut while at least one of the second inner flange or the second outer flange is separate from the second radial linkage; and connecting the one of the second inner flange or the second outer flange to the second radial linkage.

The method of the preceding clause, wherein the first outer flange and the second outer flange are integrally formed with one another as a unitary flange portion.

The method of any preceding clause, wherein the first outer flange and the second outer flange are joined by a hinge connection.

The method of the preceding clause, wherein the hinge connection comprises interlocking hinge bodies formed on the first outer flange and the second outer flange and a hinge pin extending through the hinge bodies.

The method of any preceding clause for forming the frame assembly of any preceding clause.

The method of any preceding clause, wherein the mounting bracket assembly is the mounting bracket assembly of the frame assembly of any preceding clause.

The method of any preceding clause, wherein the inner flange, the outer flange, and the radial linkage correspond to the inner flange, the outer flange, and the radial linkage of the frame assembly of any preceding clause.

The method of any preceding clause, wherein the step of laying up reinforcing fibers includes embedding at least a portion of the mounting bracket assembly within the frame as defined in any preceding clause.

The method of any preceding clause, wherein forming the hollow strut includes forming the first hollow strut or the second hollow strut of the frame assembly of any preceding clause.

The method of any preceding clause, wherein fastening the inner flange to the inner hub is performed with the fastener arrangement of the frame assembly of any preceding clause.

The method of any preceding clause, wherein providing the second mounting bracket assembly includes forming an integral flange portion or a hinge connection between the first and second outer flanges of the frame assembly of any preceding clause.

The method of any preceding clause, wherein co-molding the frame around the mounting bracket assembly forms the composite frame of any preceding clause.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. A frame assembly for a turbine engine (100) of an aircraft, the frame assembly having a radial direction and comprising:
a frame (170) including:
an inner hub (174) having an inner surface (178);
an outer shell (172, 470) located opposite the inner hub (174) and having an outer surface (176); and
a plurality of struts (158) connecting the inner hub (174) with the outer shell (172, 470), the plurality of struts (158) extending in the radial direction, at least one strut (158) of the plurality of struts (158) being a hollow strut (400) with a radial passage (440) extending therethrough, the radial passage (440) extending from an outer opening (442) formed in the outer surface (176) of the outer shell (172, 470) to an inner opening (444) formed in the inner surface (178) of the inner hub (174); and
a mounting bracket assembly (300, 302, 304, 306, 500, 502) including:
an inner flange (330) located on the inner surface (178) of the inner hub (174);
an outer flange (320) located on the outer surface (176) of the outer shell (172, 470); and
a radial linkage (340) connecting the inner flange (330) with the outer flange (320), the radial linkage (340) extending through the radial passage (440) of the hollow strut (400).

2. The frame assembly of claim 1, wherein the radial linkage (340) is an integral structure with at least one of the inner flange (330) or the outer flange (320), and/or
wherein the radial linkage (340) is an integral structure with the inner flange (330).

3. The frame assembly of claim 1 or 2, wherein the radial linkage (340) includes an inner end portion (452), the inner end portion (452) having one or more flange connectors (350), and
wherein the inner flange (330) comprises a plurality of sections, each section being engageable with the one or more flange connectors (350) of the inner end portion (452) to connect the inner flange (330) with the radial linkage (340).

4. The frame assembly of claim 4, wherein each section of the inner flange (330) is fastened to the inner hub (174) by a fastener (360) engaging with both the inner flange (330) and the inner hub (174).

5. The frame assembly of any one of claims 1 to 4, wherein the hollow strut (400) is a first hollow strut (402), and the mounting bracket assembly (500, 502) is a first mounting bracket assembly (512, 520) with the inner flange (330) being a first inner flange (330), the outer flange (320) being a first outer flange (320), and the radial linkage (340) being a first radial linkage (340),
wherein the plurality of struts (158) includes a second hollow strut (404) with a radial passage (440) extending therethrough, the radial passage (440) extending from an outer opening (442) formed in the outer surface (176) of the outer shell (172, 470) to an inner opening (444) formed in the inner surface (178) of the inner hub (174), and
wherein the frame assembly further includes a second mounting bracket assembly (514, 530) including:
a second inner flange (330) located on the inner surface (178) of the inner hub (174);
a second outer flange (320) located on the outer surface (176) of the outer shell (172, 470); and
a second radial linkage (340) connecting the second inner flange (330) with the second outer flange (320), the second radial linkage (340) extending through the radial passage (440) of the second hollow strut (404).

6. The frame assembly of claim 5, wherein the first outer flange (320) and the second outer flange (320) are integrally formed with each other,
wherein the first outer flange (320) and the second outer flange (320) are fastened to each other, or
wherein the first outer flange (320) and the second outer flange (320) are fastened to each other by a hinge (540).

7. The frame assembly of any one of claims 1 to 6, wherein the frame (170) includes a composite comprising a plurality of reinforcing fibers positioned to embed at least a portion of the mounting bracket assembly (300) within the frame (170).

8. The frame assembly of claim 7, wherein the outer shell (172, 470) is the composite and the plurality of reinforcing fibers are a positioned to form an inner outer-shell section (472) that is underneath the outer flange (320) and an outer outer-shell section (474) that is on top of the outer flange (320).

9. The frame assembly of claim 8, wherein the inner outer-shell section (472) and the outer outer-shell section (474) are connected to each other to enclose the outer flange (320) within the outer shell (172, 470).

10. The frame assembly of any one of claims 1 to 9, wherein the radial linkage (340) includes an inner end portion (452), the inner end portion (452) having a flange connector (350), and
wherein the inner flange (330) is engageable with the flange connector (350) of the inner end portion (452) to connect the inner flange (330) with the radial linkage (340).

11. The frame assembly of claim 10, wherein the flange connector (350) is an aperture (354) formed in the inner end portion (452) of the radial linkage (340), the inner flange (330) engaging with the inner end portion (452) by being inserted into the aperture (354) of the inner end portion (452).

12. The frame assembly of claim 11, wherein the inner flange (330) is fastened to the inner hub (174) by a fastener (360) engaging with both the inner flange (330) and the inner hub (174).

13. The frame assembly of claim 12, wherein the fastener (360) engages with the inner hub (174) through the inner surface (178) of the inner hub (174) and extends in the radial direction, and/or
wherein the frame assembly has an axial direction, the inner hub (174) includes an axial flange, and the fastener (360) engages with the axial flange of the inner hub (174) and extending in the axial direction.

14. The frame assembly of any one of claims 1 to 13, wherein the mounting bracket assembly (300, 302, 304, 306, 500, 502) further includes an outer mounting structure (310), the outer mounting structure (310) including the outer flange (320) and a frame connector (312).

15. The frame assembly of claim 14, wherein the frame connector (312) is a clevis including a clevis body (314) with a pin receiver (316) formed therein, and/or
wherein the frame connector (312) is an engine mount for the turbine engine (100).
